# EUROPEAN PATENT APPLICATION

(11) **EP 3 349 155 A1**
(43) Date of publication of application: **18.07.2018**
(21) Application number: 16843882.8
(22) Date of filing: 02.08.2016
(51) Int. Cl.: G06Q 10/02

(54) **EVENT INFORMATION MANAGEMENT SYSTEM AND EVENT INFORMATION MANAGEMENT PROGRAM**

(30) Priority: 11.09.2015 JP 2015179716
(71) Applicant: Infoscience Corporation, Tokyo 108-0023 (JP)
(72) Inventor: MIYA, Norio, Tokyo 108-0023 (JP)
(74) Representative: Chapman IP
(86) International application number: PCT/JP2016/003563
(87) International publication number: WO 2017/043009

(57) **Abstract**

An event information management system is configured to include data of event information configured to include data of event theme information and data of individual event information, store, in an event theme table storage unit 321, data of the event theme information including at least an event theme name, and associate data of the individual event information including at least an event period with the event theme information and also store data of the individual event information separately from the event theme information in an individual event table storage unit 325. When individual events which are of the same type and held repetitively are managed, hardware resources are utilized efficiently and management work is improved in efficiency and flexibility.

## Description

### Technical Field

The present invention relates to an event information management system and an event information management program for managing information on an event for collecting participants.

### Background Art

Each of the information management systems disclosed in Patent Document 1 and Patent Document 2 serves as a system for managing information on an event for collecting participants. The information management system disclosed in Patent Document 1 includes, in an information management server, means for registering event announcement information targeted to group members in a state where only the group members are entitled to browse, means for registering attendance/nonattendance contact information which informs of member's intention of attendance or nonattendance to the event, and means for registering attendance result information of group members in the event, so that a group administrator can obtain reference information on operation of the group activities.

The information management system disclosed in Patent Document 2 includes, in an information management apparatus, an event database for accumulating event data such as an event date and time, event contents and an expected number of participants as necessary, a member database for accumulating member data as necessary, and weather forecast receiving means for receiving weather forecast as necessary, so as to edit event announcement information by extracting event data on an event suitable for each member on the basis of the member data, the event data, and the weather forecast, and to transmit the event announcement information to a mobile terminal of each member at a timing counted backward from the event date and time of the extracted event.

### Citation List

### Patent Literature

[Patent Document 1] Japanese Patent Application Publication No. 2007-219677
[Patent Document 2] Japanese Patent Application Publication No. 2011-203914

### Summary of Invention

### Technical Problem

In the case of managing event information, management data for each individual event to be held is generally created for management. However, in view of efficient utilization of hardware resources and improvement of the management work in efficiency and flexibility, it is preferable that, as for the same type of events held repetitively, a common part in the management data be shared, and only the management data that needs to be changed be newly set, such as of event period set for each individual event.

Taking the above-described problem into consideration, the present invention is proposed, and the object of the present invention is to provide an event information management system and an event information management program for enabling to utilize hardware resources efficiently and improve the management work in efficiency and flexibility in the case of managing the same type of individual events held repetitively.

### Solution to Problem

An event information management system according to the present invention is configured to include data of event information configured to include data of event theme information and data of individual event information, store, in a storage unit, data of the event theme information including at least an event theme name, and associate data of the individual event information including at least an event period with the event theme information and store data of the individual event information separately from the event theme information in the storage unit.

According to the above characteristics, data of new individual event information having an event period is set as necessary, thereby enabling to utilize hardware resources efficiently and improve efficient and flexible management work in the case of managing the same type of individual events held repetitively.

In the event information management system according to the present invention, data of the event theme information includes an event theme name and an event location.

According to the above characteristics, as for an event whose event location has been determined, the event location is also used as data of the event theme information, thereby enabling to improve efficiency in use of hardware resources and to perform efficient management work.

The event information management system according to the present invention is configured to present an event theme screen for displaying event contents on a client terminal connected via a communication network, present an event period input screen for prompting input of an event period of an individual event in response to reception of input of a request for individual event participation made on the event theme screen, generate, in response to reception of an event period input on the event period input screen and a request for individual event participation registration, data of the individual event information of the individual event having the input event period, and store data of the individual event information in the storage unit.

According to the above characteristics, an individual event highly convenient for a user can be provided. Also, the input made on a client terminal connected communicably is reflected directly, thereby enabling to accurately and efficiently set the individual event information according to the user's request. Furthermore, an event period input screen is presented in response to input through the event theme screen displaying event contents, thereby enabling to promptly respond to user's request for participation in an event.

The event information management system according to the present invention is configured to store data of member information, store an internal schema for event for associating data of the individual event information with data of the member information, configure the internal schema for event to include an ID of the individual event information, an ID of the member, mode information set to a share mode for permitting another member to participate or an occupation mode not for permitting another member to participate, and status information indicating a state of validity, associate, in response to reception of a request for specific individual event participation registration made by a specific member, data of the member information of the specific member with data of the individual event information of the specific individual event via the internal schema for event, by setting to validity the status information of the internal schema for event including the mode information subjected to setting, and store the internal schema for event, and accept no request from another member for participation in the specific individual event associated with the specific member via the internal schema for event including the occupation mode and including the status information set to validity.

According to the above characteristics, continuous storage of the internal schema for event including the status information indicating validity enables to manage not only the information on which a specific member participates in a specific individual event, but also history information relevant to event participation such as of the fact that the participation has been cancelled afterwards. Use of the history information enables to support organizer's decision making with respect to approach to a member and/or contents of an event to be held in the future. The mode information of the internal schema for event is simply set to a share mode or an occupation mode, thereby enabling to cope with a case in which a member wishes to participate in an event with another member and also a case in which a member wishes to participate in an event alone. For example, a private lesson of English conversation or reservation of a whole restaurant can be made according to a request from a member, thereby enabling to increase sales of an event organizer side and to improve customer satisfaction. The demand for sharing or occupation can be grasped from the mode information of the internal schema for event to be stored as history information repetitively, thereby enabling to support organizer's decision making with respect to event contents. The member information is associated with the individual event information via the internal schema for event, and the history information on event participation is not described directly in the member information, thereby enabling to prevent preference and characteristics of a member from leaking even in the case of accidental leaking of the member information corresponding to personal information of a member.

In the event information management system according to the present invention, three types of states including validity, pending, and invalidity are settable as the status information, and in response to reception of a request for invalidation or a request for pending of registered participation in a specific individual event from a specific member, the status information of the internal schema for event stored in association with the member information of the specific member and the individual event information of the specific individual event is changed to invalidity or pending, and the internal schema for event is stored.

According to the above characteristics, the history information related to event participation is managed in more detail, thereby enabling to support, in a higher level, organizer's decision making with respect to approach to a member and/or contents of an event to be held in the future. Tentative reservation can be made by setting event participation in a pending state, thereby enabling to improve member's convenience in event participation.

In the event information management system according to the present invention, an internal schema is configured to include an assignment destination ID, an assignment source ID, mode information set to a share mode or an occupation mode, and status information indicating a status of validity, and the internal schema for event is configured by the internal schema, and further the internal schema is used for mutual association of different pieces of information in a system and stored.

According to the above characteristics, the internal schema having the same structure is usable not only for associating an event with a member, but also widely usable for associating various types of information on a management system in which the information of a share mode or an occupation mode and the information indicating validity or other than validity are useful in association, thereby enabling to improve the information management in efficiency and convenience. In addition, history information of the information useful in such association can be managed, thereby enabling to support organizer's decision making or the like in a higher level.

The event information management system according to the present invention is configured to store the information indicating a member capable of using the occupation mode is entitled to set the occupation mode as data of the member information, and make association only with a member having the information indicating entitling of setting the occupation mode, via the internal schema for event including the occupation mode and including the status information set to validity.

According to the above characteristics, reservations in the occupation mode are limited to some extent, thereby enabling to ensure an opportunity for another member to make a reservation for various events. Only a specific member is entitled to make a reservation in the occupation mode, thereby enabling to improve customer satisfaction by treating a specific member as a very important person (VIP).

The event information management system according to the present invention is configured to recognize, in response to reception of a request for individual event participation registration made by a specific member to participate in a specific individual event in an occupation mode, a number of associations via the internal schemas for event of the specific member each including the occupation mode and including the status information set to validity at that time, and execute the associations with the specific individual event via the internal schemas for event when the number of associations is not more than a threshold or less than the threshold.

According to the above characteristics, reservations in the occupation mode are limited to some extent in advance, thereby enabling to ensure an opportunity for another member to make a reservation for various events.

The event information management system according to the present invention is configured to recognize a number of associations via the internal schemas for event of the specific member each including the occupation mode and including the status information set to validity, and set to other than validity at least one piece of the status information associated via the internal schema for event of the specific member including the occupation mode and including the status information set to validity, when the number of associations is more than a threshold or not less than the threshold.

According to the above characteristics, reservations in the occupation mode are limited to some extent afterwards, thereby enabling to ensure an opportunity for another member to make a reservation for various events.

The event information management program according to the present invention makes a computer execute processing of configuring data of event information to include data of event theme information and data of individual event information, storing, in a storage unit, data of the event theme information including at least an event theme name, and associating data of the individual event information including at least an event period with the event theme information and storing data of the individual event information separately from the event theme information in the storage unit.

According to the above characteristics, data of new individual event information having an event period is set as necessary, thereby enabling to utilize hardware resources efficiently and improve efficient and flexible management work in the case of managing the same type of individual events held repetitively.

### Advantageous Effects of Invention

The present invention enables to utilize hardware resources efficiently and improve efficient and flexible management work in the case of managing the same type of individual events held repetitively.

### Brief Description of Drawings

Fig. 1 is a block diagram illustrating an overall configuration of an event information management system and a client terminal of an embodiment according to the present invention.
Fig. 2 is a block diagram illustrating a configuration of a data storage unit in the event information management system of the embodiment.
Fig. 3 is a diagram illustrating an event theme table in a use example of the event information management system of the embodiment.
Fig. 4 is a diagram illustrating an instructor table in a use example of the event information management system of the embodiment.
Fig. 5 is a diagram illustrating a ticket table in a use example of the event information management system of the embodiment.
Fig. 6 is a diagram illustrating an individual event table in a use example of the event information management system of the embodiment.
Fig. 7 is a diagram illustrating a member table in a use example of the event information management system of the embodiment.
Fig. 8 is a diagram illustrating a table of an internal schema for event in a use example of the event information management system of the embodiment.
Fig. 9 is a block diagram illustrating relations among an event theme, an individual event, a member and the internal schema for event in a use example of the event information management system of the embodiment.
Fig. 10 is a flowchart indicating processing of individual event participation registration in a use example of the event information management system of the embodiment.
Fig. 11 is a diagram illustrating a table in which a new internal schema for individual event is added to the table of the internal schema for event shown in Fig. 9.
Fig. 12 is a flowchart indicating processing of invalidating or withholding the individual event participation registration in a use example of the event information management system of the embodiment.
Fig. 13 is a flowchart indicating processing of event participation registration in an example where only a specific member who is entitled to use an occupation mode can participate in an individual event in an occupation mode.
Fig. 14 is a flowchart indicating example 1 of processing of limiting overuse of the occupation mode by use of a threshold.
Fig. 15 is a flowchart indicating example 2 of processing of limiting overuse of the occupation mode by use of a threshold.
Fig. 16 is a flowchart indicating processing of individual event participation registration of a modification example.
Fig. 17(a) is a diagram illustrating an event theme screen in the modification example, and Fig. 17(b) is a diagram illustrating an event period input screen in the modification example.

### Description of Embodiments

### [Event information management system and event information management program of embodiment]

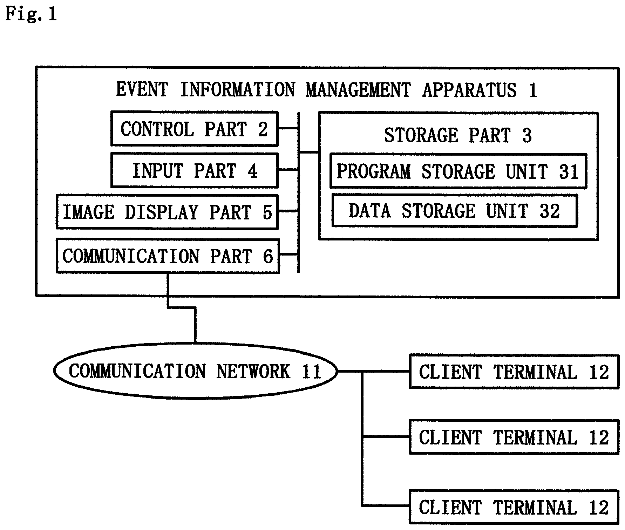

As shown in Fig. 1, the event information management system of the present embodiment is configured with an event information management apparatus 1, and the event information management apparatus 1 is connected to a client terminal 12 of a member via a communication network 11 such as the Internet. The event information management apparatus 1, which is configured with, for example, a single server or a plurality of servers connected communicably, includes a control part 2 such as a CPU for executing processing based on a predetermined control program, a storage part 3 such as a memory or a hard disk, an input part 4 such as a keyboard or a mouse, an image display part 5 such as a liquid crystal display, and a communication part 6 for performing communication via the communication network 11.

The client terminal 12, which is configured with a personal computer or a multifunctional mobile terminal, for example, a smartphone, includes a control part such as a CPU for executing processing based on a predetermined control program, a storage part such as a memory or a hard disk, an input part such as a keyboard or a mouse, an image display part such as a liquid crystal display, and a communication part for performing communication via the communication network 11.

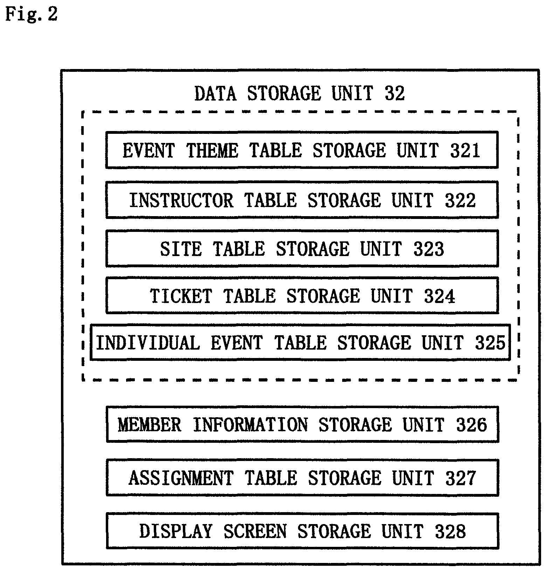

As shown in Fig. 2, the storage part 3 of the event information management apparatus 1 has a program storage unit 31 for storing a control program of the event information management apparatus 1 such as an operating system program and an event information management program, and a data storage unit 32 for storing data for use in the processing based on the event information management program.

The data storage unit 32 stores event information data including an event theme, an event location and an event period, and the stored event information data according to the present embodiment is configured to include data stored in an event theme table, an instructor table, a site table, a ticket table, and an individual event table. The event theme table is stored in an event theme table storage unit 321; the instructor table is stored in an instructor table storage unit 322; the site table is stored in a site table storage unit 323; the ticket table is stored in a ticket table storage unit 324; and the individual event table is stored in an individual event table storage unit 325.

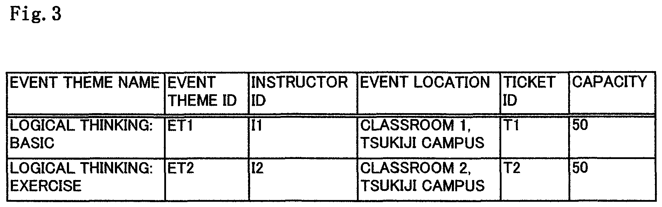

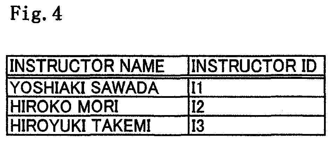

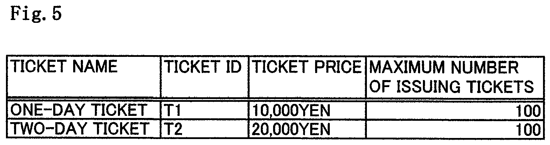

The event theme table of the example shown in Fig. 3 is configured to include event theme information including an event theme name, an event theme ID, an instructor ID, an event location, a ticket ID and a capacity. The instructor table of the example shown in Fig. 4 is configured to include an instructor name and an instructor ID, while the ticket table of the example shown in Fig. 5 is configured to include a ticket name, a ticket ID, a ticket price and a maximum number of issuing tickets. The data stored in the event theme table, the instructor table, the site table, and the ticket table are associated via various types of IDs, and event information other than an individual event name and an individual event period are defined. In other words, common event information which is common among individual events is defined.

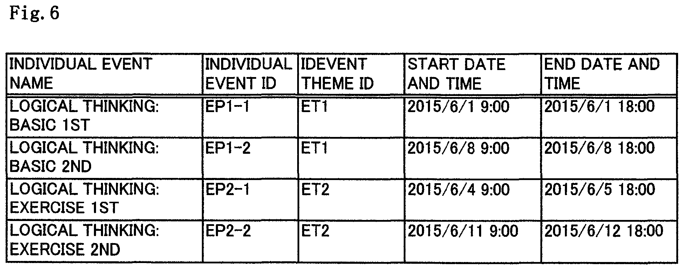

The individual event table of the example shown in Fig. 6 is configured to include an individual event name, an individual event ID, an event theme ID, a start date and time and an end date and time, and is stored in a predetermined area separately from the event theme table in the data storage unit 32. Each data of the individual event table defines an individual event name and an individual event period in the event information, and each piece of the individual event information is associated with the common event information of the events to which the individual event belongs via an event theme ID, so as to correspond to an event theme.

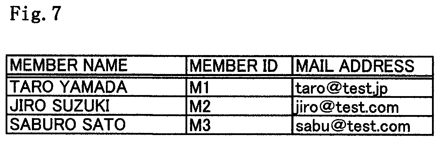

As shown in Fig. 2, the data storage unit 32 is further configured with a member information storage unit 326 for storing data of member information, so as to store required information such as member's name, a member ID and a mail address (refer to Fig. 7). The data storage unit 32 is further configured with an assignment table storage unit 327 for storing assignment data corresponding to an internal schema for event. A display screen storage unit 328 of the data storage unit 32 stores data for various types of display screens to be presented on the client terminal 12.

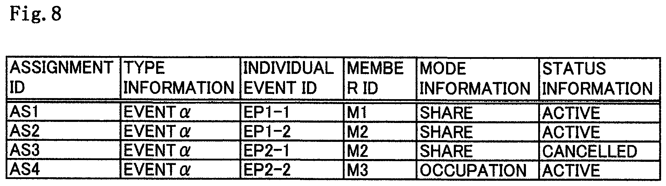

The assignment data corresponding to an internal schema for event is configured to include an assignment ID of identification information assigned for each internal schema for event, event type information, an individual event information ID, a member ID, mode information set to a share mode or an occupation mode, and status information indicating validity or other than validity. Fig. 8 shows the example configured to include an assignment ID, event type information, an individual event ID, a member ID, mode information set to a share mode or an occupation mode, and status information set to validity (active) or invalidity (cancelled).

The share mode in the mode information is a mode for permitting another member to participate in an individual event, while the occupation mode is a mode not for permitting another member to participate in an individual event.

The status information set to validity (active) or invalidity (canceled) indicates a state in which, in the case of validity (active), association of a specific member with a specific individual event via an internal schema for event (assignment data) is valid, and indicates a state in which, in the case of invalidity (cancelled), association of a specific member with a specific individual event via an internal schema for event (assignment data) has been made once but is in a canceled state at the present time. The status information may preferably also include a state of withholding (pending) in addition to validity (active) and invalidity (cancelled). The state of withholding (pending) in this case indicates a state in which association of a specific member with a specific individual event via an internal schema for event (assignment data) is made in a pending state, corresponding to a tentatively reserved state.

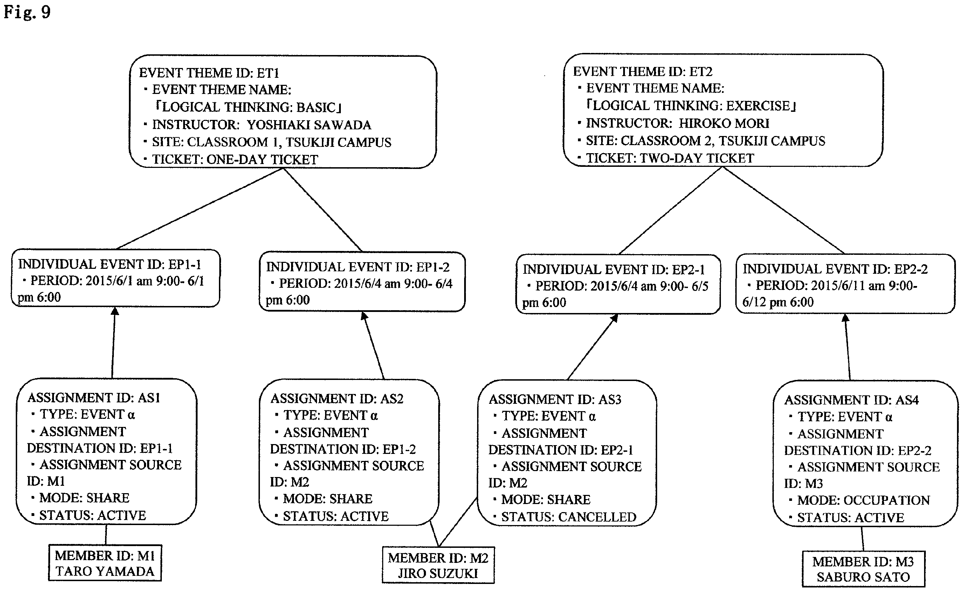

Fig. 9 shows relations among an event theme, an individual event, a member and an internal schema for event (assignment) in a use example of the event information management apparatus 1 of the embodiment, and respective tables shown in Fig. 3 to Fig. 8 store data corresponding to the relations shown in Fig. 9.

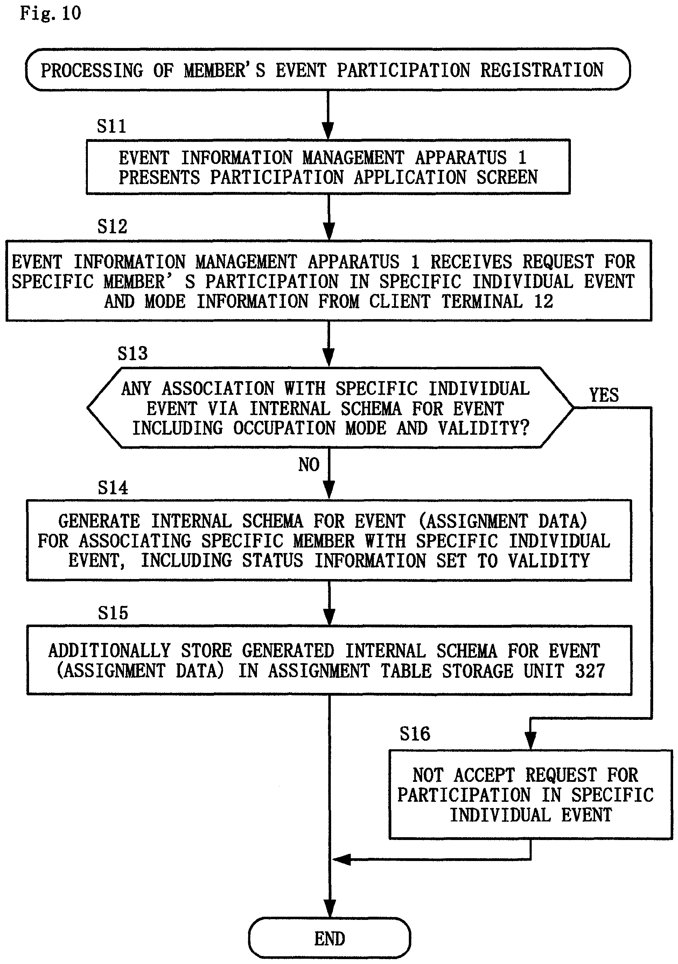

In the case of implementing processing of new registration of member's participation in an individual event in the event information management apparatus 1, in an example as shown in Fig. 10, the event information management apparatus 1 presents a participation application screen for displaying contents, event periods and the like of various types of individual events, in response to a request for display from the client terminal 12 of the member having the member ID: M1 made by clicking on a predetermined screen or the like (S11). Then, the individual event having the individual event ID: EP1-2 is designated on the participation application screen, the share mode or the occupation mode is selected and designated, a participation application button is clicked, and other processing is performed. Thereby, the event information management apparatus 1 receives, from the client terminal 12, the request for participation in the individual event having the individual event ID: EP1-2 and the selected mode information (S12).

In response to input of the request for participation in the individual event having the individual event ID: EP1-2 and the mode information, the event information management apparatus 1 uses assignment data in the assignment table storage unit 327 to check that the occupation mode is not set for the individual event having the individual event ID: EP1-2, in other words, whether or not the individual event is associated with a specific member via the internal schema for event including the occupation mode and the status information set to validity (S13).

In the case where the association in the occupation mode is not made, assignment data corresponding to the internal schema for event is newly generated, so as to associate the member information of the member having the member ID: M1 stored in the member information storage unit 326 with the individual event information having the individual event ID: EP1-2 stored in the individual event table storage unit 325 (S14). The status information of the assignment data is set to validity, and the mode information of the internal schema for event (assignment data) is set to the share mode or the occupation mode according to reception and input.

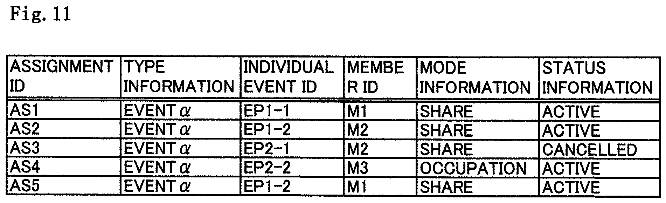

As shown in Fig. 11, the event information management apparatus 1 newly adds and stores the newly-generated internal schema for event (assignment data) having the assignment ID: AS5 in the assignment table storage unit 327 (S15), and thereby completes the association of the member information of the member having the member ID: M1 who makes a request for participate in the individual event with the individual event information having the individual event ID: EP1-2.

In the case where association in the occupation mode has been made, the event information management apparatus 1 accepts none of the request from the member having the member ID: M1 for participation in the individual event having the individual event ID: EP1-2 (S16), and returns to the client terminal 12 a message indicating that the participation request is not accepted.

The internal schema for event (assignment data) in the occupation mode is generated and stored in the same manner as in the case of the above-described setting in the share mode. In an example, in the case where the assignment data having the assignment ID: AS4 shown in Fig. 8 is to be set, the event information management apparatus 1 receives a request for participation in the individual event having the individual event ID: EP2-2 and the occupation mode as the mode information from the client terminal 12 of the member having the member ID: M3; and in the case of no association in the occupation mode, sets the status information to validity (active); sets the mode information to the occupation mode; generates the internal schema for event (assignment data) having the assignment ID: AS4; and newly and additionally stores the generated internal schema for event in the assignment table storage unit 327 for association. While in the case where the association in the occupation mode has been made, the event information management apparatus 1 accepts none of the request from the member having the member ID: M3 for participation in the individual event having the individual event ID: EP2-2, and returns a message indicating such contents.

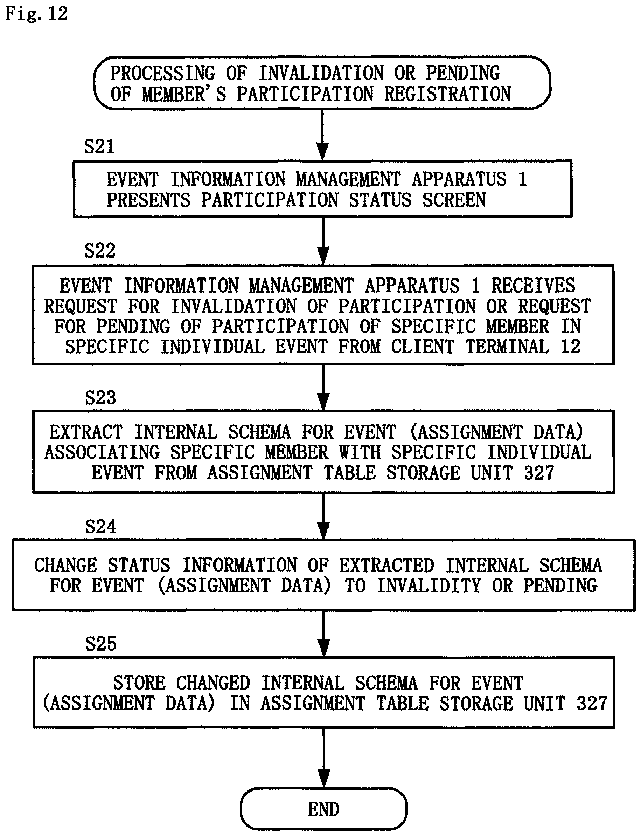

In an example as shown in Fig. 12, when a member who is registered to participate in an individual event executes the processing of invalidating or withholding the registered participation in the individual event in the event information management apparatus 1, the event information management apparatus 1 presents a participation status screen for displaying the status of registered participation in individual events in response to a request for display made by clicking or the like on the predetermined screen from the client terminal 12 of the member having the member ID: M1 (S21). The event information management apparatus 1 receives, from the client terminal 12, a request for invalidation of participation or a request for pending of participation in the individual event having the individual event ID: EP1-1, through clicking or the like for designation of the individual event having the individual event ID: EP1-1 and for invalidation of registered participation or pending of registered participation on the participation status screen (S22).

In response to input of the request for invalidation of participation or the request for pending of participation in the individual event having the individual event ID: EP1-1, the event information management apparatus 1 extracts the internal schema for event (assignment data) having the assignment ID: AS1 associating the member information of the member having the member ID: M1 with the individual event information having the individual event ID: EP1-1 from the assignment table storage unit 327 for storing the internal schemas for event (S23), changes the status information of the internal schema for event (assignment data) having the assignment ID: AS1 from validity (active) to invalidity (cancelled) or withholding (pending) (S24), and stores, in the assignment table storage unit 327, the internal schema for event (assignment data) having the assignment ID: AS1 after the status information is changed (S25), thereby completing the processing of invalidating participation or the processing of withholding participation.

It is noted that, in the case of releasing the participation pending state, the event information management apparatus 1 similarly receives from the client terminal 12 a request for releasing pending of participation in the individual event having the individual event ID: EP1-1; extracts, in response thereto, the internal schema for event (assignment data) having the assignment ID: AS1 for associating the member information of the member having the member ID: M1 with the individual event information having the individual event ID: EP1-1 from the assignment table storage unit 327 for storing the internal schemas for event; changes the status information of the internal schema for event (assignment data) having the assignment ID: AS1 from withholding (pending) to validity (active); and stores, in the assignment table storage unit 327, the internal schema for event (assignment data) having the assignment ID: AS1 after the status information is changed.

The event information management apparatus 1 can also accept participation in the participation pending state from the beginning of the processing of new participation of a member in an individual event. In an example, in response to reception of a request for pending of participation in the individual event having the individual event ID: EP1-2 from the client terminal 12, the event information management apparatus 1 newly generates the assignment data corresponding to the internal schema for event for associating the member information of the member having the member ID: M1 stored in the member information storage unit 326 with the individual event information having the individual event ID: EP1-2 stored in the individual event table storage unit 325, while setting the status information to pending, and newly and additionally stores, in the assignment table storage unit 327, the newly-generated internal schema for event (assignment data) having the assignment ID: AS5 in which the status information is set to withholding (pending).

According to the present embodiment, data of the event information is configured to include data of the event theme information and data of the individual event information, and data of new individual event information having an event period is set as necessary, thereby enabling to utilize hardware resources efficiently and improve efficient and flexible management work in the case of managing the same type of individual events held repetitively.

Data of the member information is associated with data of the individual event information via the internal schema for event, and the internal schema for event (assignment data) including the status information indicating validity or other than validity is stored, thereby enabling to manage the information indicating that a specific member participates in a specific event and also the history information relevant to event participation such as of the fact that event participation has been cancelled afterwards. Thus, use of the history information enables to support organizer's decision making with respect to approach to a member and/or contents of an event to be held in the future.

Simply setting the mode information of the internal schema for event to the share mode or the occupation mode enables to cope with a case in which a member wishes to participate in an event with another member and also a case in which a member wishes to participate in an event alone. For example, a private lesson of English conversation or reservation of a whole restaurant can be made according to a request from a member, thereby enabling to increase sales of an event organizer side and to improve customer satisfaction. The demand for sharing or occupation can be grasped from the mode information of the internal schema for event to be stored as history information repetitively, thereby enabling to support organizer's decision making with respect to event contents. The member information is associated with the event information via the internal schema for event, and the history information on event participation is not described directly in the member information, thereby enabling to prevent preference and characteristics of a member from leaking even in the case of accidental leaking of the member information corresponding to personal information of a member.

In the case where three types of states as the status information including validity, pending and invalidity can be set in the internal schema for event (assignment data), the history information related to event participation is managed in more detail, thereby enabling to support, in a higher level, organizer's decision making with respect to approach to a member and/or contents of an event to be held in the future. Tentative reservation can be made by setting event participation in a pending state, thereby enabling to improve member's convenience in event participation.

### [Modification examples and the like of embodiments]

The inventions disclosed in the present specification include the configurations of respective inventions and embodiments, and further include, within an applicable range, the configurations in which the above configurations are partially modified to other than those disclosed in the present specification, the configurations in which the configuration other than those disclosed in the present specification is added to the above configurations, or the superordinate concept in which the above configurations are partially deleted to the extent that a partial effect can be obtained. The following modification examples are also included.

For example, in the event information management apparatus 1, it is preferable that an internal schema be configured to include, for example, a name, type information, an assignment destination ID, an assignment source ID, mode information set to a share mode or an occupation mode, and status information indicating validity or other than validity, and an internal schema for event be configured as one use of the internal schema, and further the internal schema be stored after being used for mutual association of different pieces of information in a system. As a result, the internal schema having the same structure is usable not only for associating an event with a member, but also widely usable for associating various types of information on a management system in which the information of a share mode or an occupation mode and the information indicating validity or other than validity are useful in association, thereby enabling to improve efficiency and convenience in information management. In addition, history information of the information useful in such association is enabled to be managed, thereby enabling to support organizer's decision making or the like in a higher level. In an example, the internal schema is usable for registering a member in a group by associating a member with a group via the internal schema, in addition to association of a member with event participation. In this case, the information of a share mode or an occupation mode and the information indicating validity or other than validity is usable in management of members in a group.

In the configuration of the above-described embodiment, an arbitrary member can select and use the occupation mode or the share mode as the mode information, and the selected mode information is set in the internal schema for event (assignment data). Alternatively, members who can use the occupation mode may be limited to members each having a specific qualification, thereby enabling to limit reservations to be made in the occupation mode to some extent, resulting in ensuring an opportunity for another member to make a reservation for various events. In addition, only a specific member is entitled to make a reservation in the occupation mode, thereby enabling to improve customer satisfaction by treating a specific member as VIP.

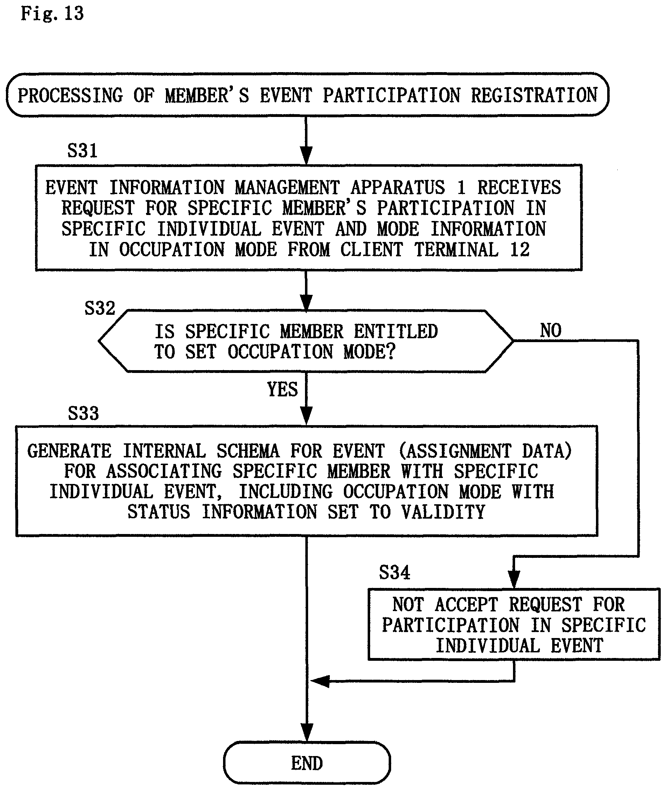

In this case, in an example, the event information management apparatus 1 stores the information indicating entitlement to set the occupation mode with respect to a member who can use the occupation mode as data of the member information to be stored in the member information storage unit 326, and executes, in the processing of registering event participation of a member as shown in Fig. 13, processing such as of receiving, from the client terminal 12, a request from a specific member for participation in a specific individual event and the mode information of the designated occupation mode (S31); checking whether or not the specific member is entitled to set the occupation mode by use of data in the member information storage unit 326 (S32); in the case where the specific member is a member having the information indicating the member entitled to set the occupation mode, making association via the internal schema for event including the occupation mode and the status information set to validity with respect to a specific individual event (S33); and in the case where the specific member is a member not having the information indicating the member entitled to set the occupation mode, not accepting the request for participate in the received specific individual event (S34).

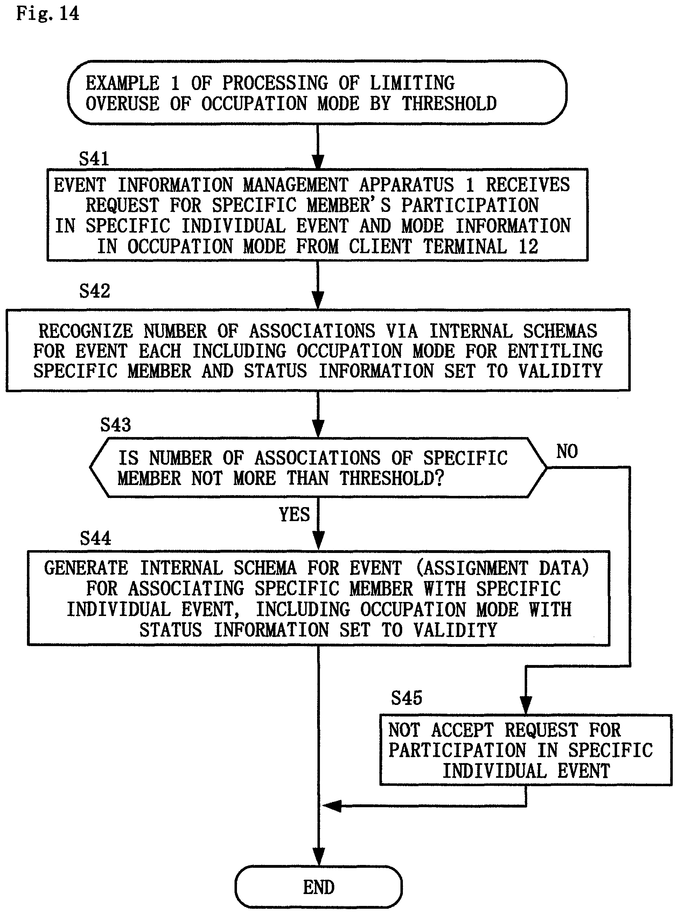

In an example as shown in Fig. 14, the event information management apparatus 1 may execute processing such as of receiving and responding to input of a request from a specific member for participation in a specific individual event in the occupation mode (S41); by using as a key the member ID, the status information set to validity, and the mode information set to the occupation mode, recognizing the number of associations via the internal schemas for event of the specific member each including the occupation mode and including the status information set to validity at that time, from the internal schema for event (assignment data) stored in the assignment table storage unit 327 (S42); comparing the recognized number with the threshold number of associations stored in a predetermined area of the data storage unit 32; in the case where the number of associations with respect to a specific member is not more than the threshold or less than the threshold (S43), making association with the specific individual event via the internal schemas for event in the occupation mode (S44); and in the case where the number of associations with respect to a specific member is more than the threshold or not less than the threshold (S43), accepting none of the request for participation in the received specific individual event (S45). The above processing also enables to limit reservations in the occupation mode to some extent, thereby enabling to ensure an opportunity for another member to make a reservation for various events.

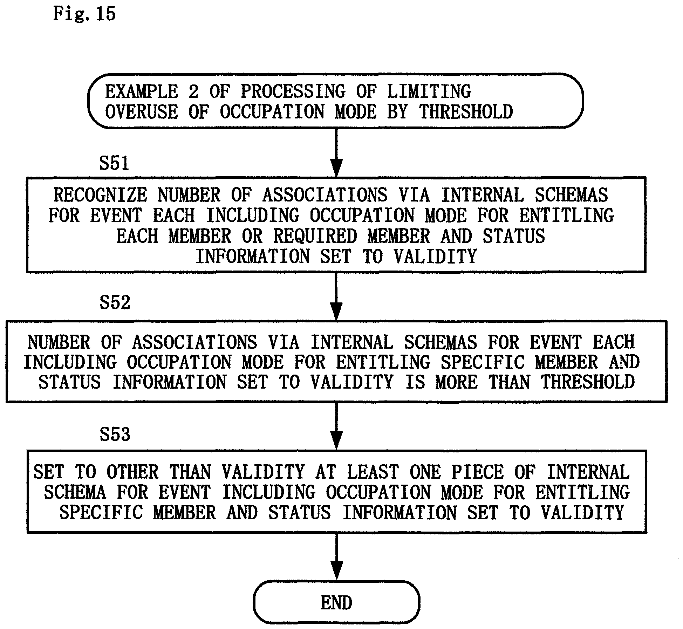

In an example as shown in Fig. 15, the event information management apparatus 1 may execute processing such as of recognizing, by using as a key the status information set to validity and the mode information set to the occupation mode at an arbitrary point of the time, the number of associations via the internal schemas for event of each member or required member each including the occupation mode and including the status information set to validity at that time, from the internal schema for event (assignment data) stored in the assignment table storage unit 327 (S51); comparing the recognized number with the threshold number of associations stored in a predetermined area of the data storage unit 32; in the case where the number of associations with respect to a specific member is more than the threshold or not less than the threshold (S52), setting to other than validity at least one piece of status information associated via the internal schema for event of the specific member including the occupation mode and including the status information set to validity (S53). In this case, the event information management apparatus 1 may be configured to execute processing of invalidating a predetermined number of associations from the latest in the time order or invalidating all of the associations, and then storing the invalidated internal schemas for event in the assignment table storage unit 327. The above processing also enables to limit reservations in the occupation mode to some extent, thereby enabling to ensure an opportunity for another member to make a reservation for various events.

In the above-described embodiment, the event information management apparatus 1 is configured to previously store the individual event information having the event period corresponding to event theme information, select an individual event having the event period convenient for a member among the individual events in the individual event information, and associate the individual event information of the selected individual event with the member information of the member having made selection. Alternatively, the event information management apparatus 1 may be configured to generate, when a member specifies an event period of the individual event corresponding to an event theme, individual event information of the individual event having the specified event period, and to store it in the individual event table storage unit 325.

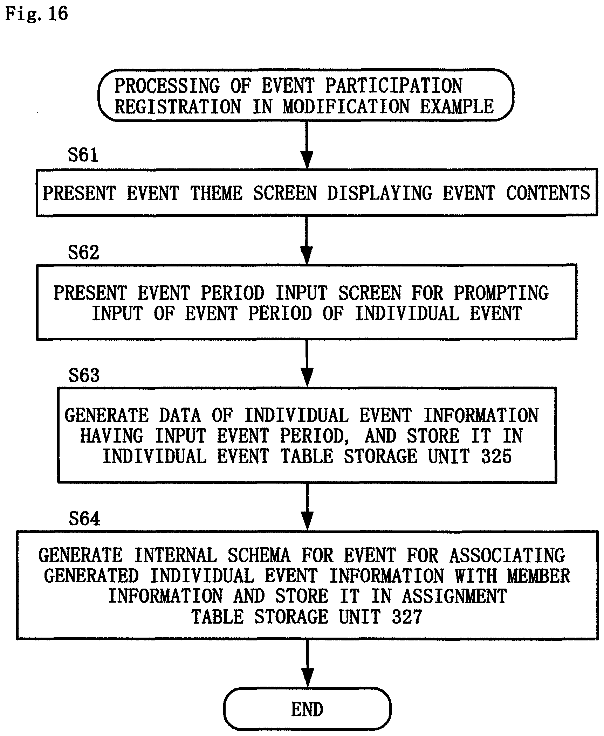

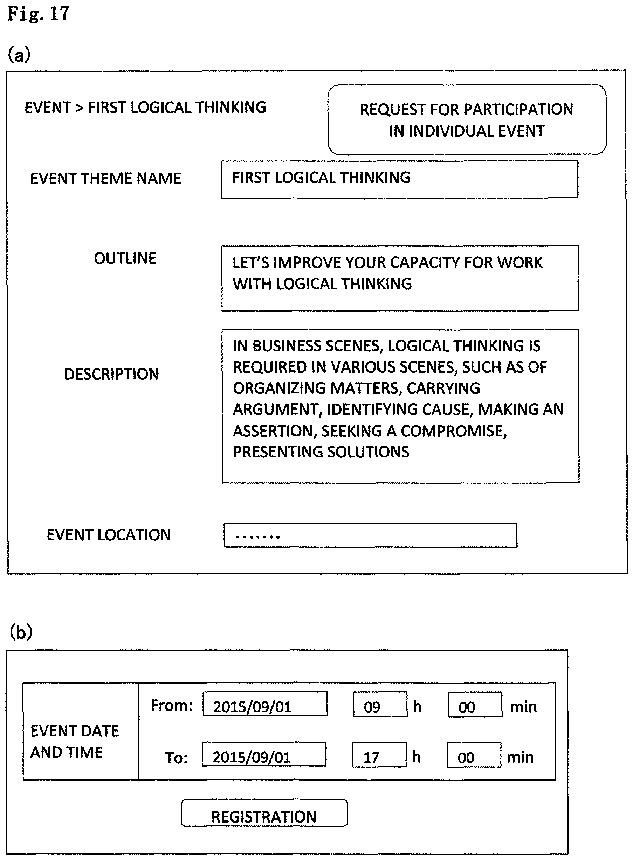

In this case, in an example as shown in Fig. 16, in data exchange with the client terminal 12 of the member whose member ID has been specified on the access screen or the like in advance, the event information management apparatus 1 presents an event theme screen displaying event contents in response to a request for display made by clicking or the like on a predetermined screen via a communication network from the client terminal 12 of the member having the member ID: M1 (S61). Fig. 17(a) shows an example of the event theme screen including an event theme name, an outline of an event, description of an event, and an event location.

Thereafter, when input is made through a button for a request for participation in an individual event on the event theme screen of the client terminal 12, the event information management apparatus 1 presents an event period input screen for prompting a user to input an event period of an individual event in response to reception of the input for the request for participation in the individual event (S62). Fig. 17(b) shows an example of the event period input screen including entry fields of a start date and time and an end date and time, and a registration button for input of the request for individual event participation registration.

Thereafter, when a registration button on the event period input screen of the client terminal 12 is input so as to input an event period and input a request for individual event participation registration, the event information management apparatus 1 generates, in response to reception of the event period and the request for individual event participation registration input on the event period input screen, data of individual event information of an individual event having the input event period, and stores it in the individual event table storage unit 325 (S63). Corresponding thereto, the event information management apparatus 1 generates, for example, the internal schema for event (assignment data) in the occupation mode, associates the generated individual event information with the member information of the member having the member ID: M1 who wishes to participate in the individual event, and additionally stores the newly-generated internal schema for event in the assignment table storage unit 327 (S64).

It is noted that, in the modification example described above, the event information management apparatus 1 may be configured to check, prior to generation of data of the individual event information, whether there are any pieces of individual event information having duplicated event periods from the individual event information having been stored in the individual event table storage unit 325, and to present the event period input screen on the client terminal 12 in the case where there are some pieces of individual event information having duplicated event periods, so as to prompt a user to input another event period and to input a request for individual event participation registration.

In the above-described modification example, an event location is not included in the event theme information, and the event information management apparatus 1 may be configured to prompt a user to input an event location on the event period input screen or the like, include the received event location having been input on the client terminal 12 in the individual event information, and store the individual event information having the event period and the event location in the individual event table storage unit 325.

The modification example in which a member specifies an event period of the individual event corresponding to the event theme enables to provide an individual event highly convenient for a user. The modification example may directly reflect the input made on the communicably-connected client terminal 12, thereby enabling to accurately and efficiently set the individual event information according to user's request. Furthermore, the modification example enables to promptly respond to user's request for participation in an event, by presenting the event period screen in response to input through the event theme screen displaying event contents.

The events according to the present invention include an appropriate event which a member can participate in or can attend, for example, an event held irregularly, an event held regularly, and an opportunity to receive service provided regularly such as every day or service provided irregularly. For example, a medical examination appointment, and dining at restaurant are also included.

The present invention also includes the case where individual event information is associated with member information not via an internal schema for event, such as by including a member ID in individual event information so as to associate individual event information with member information, without being limited to the case where individual event information is associated with member information via an internal schema for event.

### Industrial Applicability

The present invention is available, for example, in the case where service through the Internet accepts member's participation in an event, thereby managing participation information.

### Reference Signs List

1 ... event information management apparatus
2 ... control part
3 ... storage part
31 ... program storage unit
32 ... data storage unit
321 ... event theme table storage unit
322 ... instructor table storage unit
323 ... site table storage unit
324 ... ticket table storage unit
325 ... individual event table storage unit
326 ... member information storage unit
327 ... assignment table storage unit
328 ... display screen storage unit
4 ... input part
5 ... image display part
6 ... communication part
11 ... communication network
12 ... client terminal

## Claims

1. An event information management system configured to:
include data of event information configured to include data of event theme information and data of individual event information;
store, in a storage unit, data of the event theme information including at least an event theme name; and
associate data of the individual event information including at least an event period with the event theme information, and store data of the individual event information separately from the event theme information in the storage unit.

2. The event information management system according to claim 1, wherein
data of the event theme information includes the event theme name and an event location.

3. The event information management system according to claim 1 or claim 2, the event information management system being configured to:
present an event theme screen for displaying event contents on a client terminal connected via a communication network;
present an event period input screen for prompting input of an event period of an individual event in response to reception of input of a request for individual event participation made on the event theme screen; and
in response to reception of an event period input on the event period input screen and a request for individual event participation registration, generate data of the individual event information of the individual event having the input event period, and store data of the individual event information in the storage unit.

4. The event information management system according to any one of claim 1 to claim 3, the event information management system being configured to:
store data of member information;
store an internal schema for event for associating data of the individual event information with data of the member information;
configure the internal schema for event to include an ID of the individual event information, an ID of the member, mode information set to a share mode for permitting another member to participate and an occupation mode not for permitting another member to participate, and status information indicating a state of validity;
associate, in response to reception of a request for specific individual event participation registration made by a specific member, data of the member information of the specific member with data of the individual event information of the specific individual event via the internal schema for event, by setting to validity the status information of the internal schema for event including the mode information subjected to setting, and store the internal schema for event; and
accept no request from another member for participation in the specific individual event associated with the specific member via the internal schema for event including the occupation mode and including the status information set to validity.

5. The event information management system according to claim 4, wherein
three types of states including validity, pending, and invalidity are settable as the status information, and wherein
in response to reception of a request for invalidation or a request for pending of registered participation in a specific individual event from a specific member,
the status information of the internal schema for event stored in association with the member information of the specific member and the individual event information of the specific individual event is changed to invalidity or pending, and the internal schema for event is stored.

6. The event information management system according to claim 4 or claim 5, wherein
an internal schema is configured to include an assignment destination ID, an assignment source ID, mode information set to a share mode or an occupation mode, and status information indicating a status of validity, and wherein
the internal schema for event is configured to include the internal schema, and further
the internal schema is used for mutual association of different pieces of information in a system and stored.

7. The event information management system according to any one of claim 4 to claim 6, the event information management system being configured to:
store information indicating entitlement to set the occupation mode with respect to a member capable of using the occupation mode as data of the member information; and
make association only with a member having the information indicating entitlement to set the occupation mode, via the internal schema for event including the occupation mode and including the status information set to validity.

8. The event information management system according to any one of claim 4 to claim 6, the event information management system being configured to:
recognize, in response to reception of a request for individual event participation registration made by a specific member to participate in a specific individual event in an occupation mode, a number of associations via the internal schemas for event of the specific member each including the occupation mode and including the status information set to validity at a time, and execute the associations with the specific individual event via the internal schemas for event when the number of associations is not more than a threshold or less than the threshold.

9. The event information management system according to any one of claim 4 to claim 6, the event information management system being configured to:
recognize a number of associations via the internal schemas for event of a specific member each including the occupation mode and including the status information set to validity, and set, to other than validity at least one piece of the status information associated via the internal schema for event of the specific member including the occupation mode and including the status information set to validity, when the number of associations is more than a threshold or not less than the threshold.

10. An event information management program for making a computer execute processing, the processing of:
configuring data of event information to include data of event theme information and data of individual event information;
storing, in a storage unit, data of the event theme information including at least an event theme name; and
associating data of the individual event information including at least an event period with the event theme information, and storing data of the individual event information separately from the event theme information in the storage unit.
